# EUROPÄISCHE PATENTSCHRIFT

(11) **EP 2 622 245 B1**
(45) Veröffentlichungstag und Bekanntmachung des Hinweises auf die Patenterteilung: **21.05.2014**
(21) Anmeldenummer: 11761481.8
(22) Anmeldetag: 29.06.2011
(51) Int. Cl.: F16J 9/14, F16J 9/26

(54) **VERFAHREN ZUR HERSTELLUNG EINES KOLBENRINGS**
METHOD FOR PRODUCING A PISTON RING
PROCÉDÉ DE FABRICATION D'UN SEGMENT DE PISTON

(30) Priorität: 27.09.2010 DE 102010046551
(43) Veröffentlichungstag der Anmeldung: 07.08.2013
(73) Patentinhaber: Federal-Mogul Burscheid GmbH, 51399 Burscheid (DE)
(72) Erfinder: MEYER, Klaus, 42929 Wermelskirchen (DE)
(74) Vertreter: Döpp, Ludger
(86) Internationale Anmeldenummer: PCT/DE2011/001384
(87) Internationale Veröffentlichungsnummer: WO 2012/041267

(56) Entgegenhaltungen:
- US-A1- 2009 026 711

## Beschreibung

Die Erfindung betrifft ein Verfahren zur Herstellung eines mit einem Stoß versehenen Kolbenrings.

Durch steigende Leistungsdichte, sowohl im Otto- als auch im Dieselmotor, steigt bei gleichem Maße die Belastung des Kolbenrings im Hinblick auf Verschleiß- und Temperaturbeständigkeit. Um dem entgegenzuwirken, werden vielfach laufflächenseitig verchromte oder nitrierte Kolbenringe erzeugt, die bereits einen hohen Härtegrad mit sich bringen. Darüber hinaus kommen mittlerweile, auch im Hinblick auf die angesprochene Leistungsdichte, Kolbenringe zum Einsatz, die sehr harte Schichtsysteme, wie beispielsweise PVD- (Physical Vapour Deposition) oder HVOF-Schichten (Hochgeschwindigkeits-Flammspitzen), beinhalten. Dieser Härtegrad bringt hohe Eigenspannungen mit sich, welche die Ringform und die Radialdruckverteilung beeinflussen können.

Diese hohe Eigenspannungen erzeugen sowohl bei der Fertigung als auch im motorischen Einsatz eine unerwünschte Veränderung der Ringform und der Radialdruckverteilung. Es kommt besonders durch die im Verhältnis zum Kolbenringgrundmaterial wesentliche geringere Wärmeausdehnung zum so genannten Bimetalleffekt, welcher dafür sorgt, dass es unter den vorliegenden Betriebstemperaturen zu einem erhöhten Druck im Bereich des Stoßes kommt. Dies wiederum führt zu einem erhöhten Laufflächenverschleiß, insbesondere in dieser Zone.

Eine mögliche Gegenmaßnahme wäre eine angepasste Auslegung der Kolbenringgeometrie (negative Ovalität), die den Radialdruck im Stoßbereich im Extremfall bis zur Lichtspaltbildung herabsetzen könnte. Dieses Verfahren ist jedoch, insbesondere in Verbindung mit aus Profildraht hergestellten Kompressionskolbenringen, aus fertigungstechnischer Sicht nicht umsetzbar. Vor allem bei der Laufflächenbearbeitung durch Rundläppen ist ein ausreichender Radialdruck im Stoß für das Bearbeitungsergebnis entscheidend.

Aufgrund der immer enger werdenden Stoßspiele und Stoßspieltoleranzen ist die technische Wirksamkeit negative Ovalitäten zu erzeugen, um den hohen Eigenspannungen entgegenzutreten, wirtschaftlich nicht realisierbar, da die Läppbuchse bereits nach sehr kurzer Zeit ausgetauscht werden muss.

Die DE 100631 offenbart ein Verfahren bei Dichtungsringen von durchweg gleichem Querschnitt eine allseitig gleichmäßige Anpressung an die Dichtungsfläche zu erzielen, wobei der Ring auf der äußeren oder inneren Fläche, je nachdem, ob der Ring nach innen oder nach außen federn soll, durch Hämmern oder Walzen verdichtet wird, und zwar an der seinen Enden gegenüberliegenden Stelle am stärksten und von dort nach den Enden zunehmend ab.

Durch die DE 36 12 454 A1 ist ein Kolbenring zur Gasabdichtung bekannt geworden, wobei sich der Ring zu den Stoßenden hin vom inneren Radius her so verjüngt, dass bei einem Abheben der Stoßenden in Folge der Massenkraft kein bzw. nur ein verringertes tordiertes Moment an der Abhebestelle entstehen kann und dessen Stoßausführung nach oben sich so erweitert, dass bei Anlage an der Oberflanke der Ring zum Feuersteg stark gasundicht ist.

Die US 2009/0026711 ist ein Kompressionskolbenring zu entnehmen. Im Bereich der beiden Stoßenden wird mittels eines Werkzeugs ein definierter Materialabtrag vorgenommen. Der Kolbenring kann mit einer verschleißfesten Schicht versehen werden.

Der Erfindung liegt die Aufgabe zugrunde, ein wirtschaftliches Verfahren zur Herstellung eines, mit einer im Laufflächenbereich vorgesehenen harten Beschichtung versehenen Kolbenring bereitzustellen, das den stets ansteigenden Leistungsdichten, sowohl im Otto- als auch im Dieselmotor, gerecht wird.

Diese Aufgabe wird gelöst durch Verfahren zur Herstellung eines mit einem Stoß versehenen Kolbenrings, indem ein ringförmiger metallischer Grundkörper, zumindest im Bereich seiner äußeren Umfangsfläche mit mindestens einer harten Schicht versehen wird, wobei im Anschluss an diese Beschichtung die innere Umfangsfläche des Kolbenrings zumindest partiell in wandstärkenreduzierender Weise durch Materialabtrag bearbeitet wird und der Materialabtrag, ausgehend vom Stoß, jeweils über einen Umfangsbereich zwischen 10 und 120°, insbesondere 90°, erfolgt und wobei zumindest die innere Umfangsfläche des Kolbenrings mit einer Nitrierschicht versehen wird, die im Anschluss an die Beschichtung der äußeren Umfangsfläche des Kolbenrings dem Materialabtrag unterzogen wird.

Vorteilhafte Weiterbildungen des erfindungsgemäßen Verfahrens sind den zugehörigen Unteransprüchen zu entnehmen.

Von besonderem Vorteil ist, dass die Bearbeitung der inneren Umfangsfläche, insbesondere im Stoßbereich, nach dem abschließenden Rundläppvorgang durchgeführt wird. Die Bearbeitung kann hierbei, ausgehend von den Stoßenden bis maximal 120°, insbesondere 90°, in beiden Umfangsrichtungen, ausgehend vom Stoß, erfolgen.

Die Erfindung bezieht sich ausschließlich auf Kolbenringe, insbesondere Kompressionskolbenringe, die mit extrem harten Laufflächenbeschichtungen (z.B. PVD, HVOF) versehen sind, die die eingangs angesprochenen Probleme bereiten.

Durch die Materialabnahme, insbesondere im stoßnahen Umfangsbereich wird das radiale Flächenträgheitsmoment reduziert. Die Reduzierung des Flächenträgheitsmoments, insbesondere in den stoßnahen Bereichen, führt zu einer gezielten Radialdruckreduzierung.

Gleichzeitig wird bei Betriebstemperatur des Kolbenrings zusätzlich die durch den Bimetalleffekt erfolgte Formänderung reduziert, da der Anteil des stärker wachsenden Materials kleiner wird.

Von besonderem Vorteil ist, dass bei auf der Innenumfangsfläche nitrierten Kolbenringen dieser Effekt zusätzlich verstärkt wird, da die Nitrierschicht Druckeigenspannungen aufweist. Werden derartige Spannungen durch ein partielles Abtragen der Nitrierschicht entfernt, fällt der Radialdruck an der Lauffläche ebenfalls ab.

Durch die Möglichkeit, den reduzierten Radialstoßdruck am Ende des Bearbeitungsprozesses herbeiführen zu können, kann der Kolbenring für den Herstellungsprozess mit einem höheren Stoßdruck ausgelegt werden (z.B. kreisförmig oder positiv-oval). Hierdurch wird insbesondere der für das tribologische Verhalten der Lauffläche entscheidende Läppprozess positiv beeinflusst.

Neben dem bereits angesprochenen reduzierten Laufflächenverschleiß am Stoß wird darüber hinaus auch eine Verschleißreduzierung eines Reibpartners, beispielsweise einer Zylinderlaufbuchse, durch bessere tribologische Eigenschaften der Laufflächenbeschichtung des Kolbenrings herbeigeführt.

Des Weiteren kann ein verbessertes Läppergebnis bei Kolbenringen mit geringer Tangentialkraft erzeugt werden.

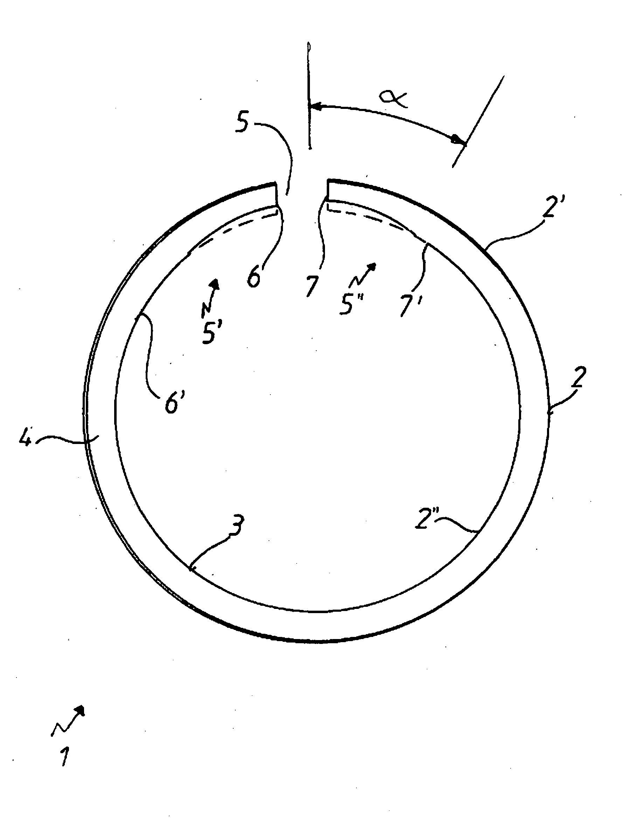

Der Erfindungsgegenstand ist anhand eines Ausführungsbeispiels in der Zeichnung dargestellt und wird wie folgt beschrieben.

In der einzigen Figur prinzipiell dargestellt ist ein Kolbenring 1, insbesondere ein Kompressionskolbenring, der in dieser Darstellung eine Lauffläche 2, eine innere Umfangsfläche 3 sowie eine obere Ringflanke 4 aufweist. Der Kolbenring 1 weist darüber hinaus einen Stoß 5 auf. In dieser beispielhaften Darstellung soll der Kolbenring 1 mit einer, im Bereich der Lauffläche 2 aufgebrachten PVD-Schicht 2' versehen sein. Wie bereits angesprochen, beeinflussen derartig harte Laufflächenschichten die Eigenspannung des Kolbenrings 1. Dies insbesondere unter dem Aspekt, dass zwischen dem (weicheren) Grundmaterial des Kolbenrings 1 und der (härteren) PVD-Schicht andersartige Wärmeausdehnungen gegeben sind, die sich insbesondere negativ auf den Stoßbereich 5 auswirken. Dies bedeutet, dass der Stoßbereich 5 radial nach außen auffedert und daher in diesem Bereich eine erhöhte Anpresskraft auf den Reibpartner, beispielsweise eine Zylinderlaufbuchse, erzeugt. Um diesem negativen Effekt entgegenzuwirken, wird erfindungsgemäß vorgeschlagen, im Anschluss an die Oberflächenbeschichtung des Kolbenrings, insbesondere der Beschichtung der Lauffläche 2 mit einer PVD-Schicht 2' und einem Läppvorgang, die problematischen Bereiche des Kolbenrings 1, nämlich die stoßnahen Bereiche 5',5" des Kolbenrings 1 einer Bearbeitung zu unterziehen, dergestalt, dass ausgehend von den Stoßkanten 6,7 des Stoßes 5 über einen Umfangswinkel α von beispielsweise 20° ein Materialabtrag herbeigeführt wird. Der Materialabtrag findet hierbei im Bereich der jeweiligen Stoßkanten 6,7 sein Maximum und in Richtung des Auslaufes 6',7' sein Minimum. Je nach Ringausführung und Einsatzfall kann der Winkel α bis zu 90° betragen.

Durch diese Maßnahme wird dem so genannten Bimetalleffekt aufgrund unterschiedlicher Werkstoffpaarungen, herbeigeführt durch die Beschichtung eines weicheren Grundkörpers mit einem härteren Werkstoff, entgegengetreten.

In manchen Fällen ist es notwendig, Kolbenringe zu nitrieren, wobei durch den Nitriervorgang bereits eine harte Oberflächenschicht erzeugt wird. Sofern auf dieser Nitrierschicht dann noch eine PVD- oder HVOF-Schicht abgeschieden wird, ist es zur Reduzierung der dann gegebenen hohen Eigenspannung notwendig, zumindest partiell auch die Nitrierschicht am Innenumfang des Kolbenrings durch Materialabtrag zu reduzieren oder zumindest partiell vollständig zu entfernen.

## Patentansprüche

1. Verfahren zur Herstellung eines mit einem Stoß (5) versehenen Kolbenrings (1), indem ein ringförmiger metallischer Grundkörper, zumindest im Bereich seiner äußeren Umfangsfläche (2) mit mindestens einer harten Schicht (2') versehen wird, wobei im Anschluss an diese Beschichtung die innere Umfangsfläche (3) des Kolbenrings (1) zumindest partiell in wandstärkenreduzierender Weise durch Materialabtrag bearbeitet wird und der Materialabtrag, ausgehend vom Stoß (5), jeweils über einen Umfangsbereich (α) zwischen 10 und 120°, insbesondere 90°, erfolgt und wobei zumindest die innere Umfangsfläche (3) des Kolbenrings (1) mit einer Nitrierschicht (2") versehen wird, die im Anschluss an die Beschichtung (2') der äußeren Umfangsfläche (2) des Kolbenrings (1) dem Materialabtrag unterzogen wird.

2. Verfahren nach Anspruch 1, **dadurch gekennzeichnet, dass** die beschichtete Lauffläche vor dem Materialabtrag der inneren Lauffläche einem Läppvorgang unterzogen wird.

3. Verfahren nach Anspruch 1 oder 2, **dadurch gekennzeichnet, dass** die innere Umfangsfläche (3) der dem Stoß (5) jeweils zugewandten Bereiche (5',5") des Kolbenrings (1) dem Materialabtrag unterzogen wird.

4. Verfahren nach einem der Ansprüche 1 bis 3, **dadurch gekennzeichnet, dass** sich der Materialabtrag, ausgehend vom Stoß (5), in Umfangsrichtung des Kolbenrings (1) gesehen, reduziert.

## Claims

1. A method for producing a piston ring (1) provided with a joint (5), in that an annular metal base body is provided with at least one hard layer (2'), at least in the area of its outer circumferential surface (2), wherein subsequent to this coating, the inner circumferential surface (3) of the piston ring (1) is at least partially treated in a wall thickness reducing manner by material removal and the material is removed starting from the joint (5) respectively over a circumferential area (α) between 10 and 120°, in particular 90°, and wherein at least the inner circumferential surface (3) of the piston ring (1) is provided with a nitrided layer (2") which will be subjected to the material removal subsequent to the coating (2') of the outer circumferential surface (2) of the piston ring (1).

2. A method according to claim 1, **characterized in that** the coated bearing surface will be subjected to a lapping process before the material removal of the inner bearing surface.

3. A method according to claim 1 or 2, **characterized in that** the inner circumferential surface (3) of the areas (5', 5") of the piston ring (1) which respectively face the joint (5) is subjected to the material removal.

4. A method according to one of the claims 1 through 3, **characterized in that** the material removal is getting reduced starting from the joint (5), seen into the circumferential direction of the piston ring (1).

## Revendications

1. Procédé de fabrication d'un segment de piston (1) muni d'une coupe (5), lequel procédé consiste à munir un corps de base métallique et annulaire, au moins au niveau de sa surface circonférentielle extérieure (2), d'une couche dure (2') et, après ce revêtement, à traiter au moins partiellement la surface circonférentielle intérieure (3) de façon à réduire l'épaisseur de la paroi par enlèvement de matière, et l'enlèvement de matière se fait à partir de la coupe (5), respectivement sur une zone circonférentielle (α) comprise entre 10 et 120°, notamment de 90°, et au moins la surface circonférentielle intérieure (3) du segment de piston (1) est munie d'une couche de nitruration (2"), qui est soumise à l'enlèvement de matière après le revêtement (2') de la surface circonférentielle extérieure (2) du segment de piston (1).

2. Procédé selon la revendication 1, **caractérisé en ce que** la surface de roulement revêtue est soumise à une opération de rodage avant l'enlèvement de matière sur la surface de roulement intérieure.

3. Procédé selon la revendication 1 ou la revendication 2, caractérisé de en ce que la surface circonférentielle intérieure (3) des zones (5', 5") du segment de piston lesquelles font chacune face à la coupe (5) est soumise à l'enlèvement de matière.

4. Procédé selon l'une des revendications 1 à 3, **caractérisé en ce que** l'enlèvement de matière se réduit à partir de la coupe (5), vu dans la direction circonférentielle du segment de piston (1).
